Europäisches Patentamt

(19) European Patent Office

Office européen des brevets

(11) Publication number: **0 106 917**
**A1**

## (12) EUROPEAN PATENT APPLICATION

(21) Application number: **82111599.5**

(22) Date of filing: **14.12.82**

(51) Int. Cl.³: **F 02 B 43/10,** F 02 M 25/12, G 21 K 1/00

(30) Priority: **21.10.82 US 435889**

(43) Date of publication of application: **02.05.84 Bulletin 84/18**

(84) Designated Contracting States: **AT BE CH DE FR GB IT LI LU NL SE**

(71) Applicant: **Meyer, Stanley A., 3792 Broadway, Grove City Ohio 43123 (US)**

(72) Inventor: **Meyer, Stanley A., 3792 Broadway, Grove City Ohio 43123 (US)**

(74) Representative: **Wasmeier, Alfons, Dipl.-Ing. et al, Postfach 382 Greflingerstrasse 7, D-8400 Regensburg (DE)**

(54) **Gas electrical hydrogen generator.**

(57) A hydrogen gas generator system for converting water into hydrogen and oxygen gasses, in combination with a magnetic particle accelerator for voltage/current amplification. The hydrogen gas generator encompasses an array of plates immersed in water in a pressure tight enclosure. Direct current voltage applied to the plates causes the hydrogen/oxygen gasses to disassociate from the water molecule. The upper portion of the container is a hydrogen/oxygen collection chamber for maintaining a predetermined gas pressure. A hydrogen/oxygen gas mixture outlet means connected to the collection chamber of the generator includes a magnetic polarizer for establishing a magnetic field and thereby imparting a magnetic potential to the hydrogen gas and the oxygen gas atoms as they are being pressure released from the collection chamber. Attached to the gas outlet means is a non-magnetic conductive loop of tubing. A coil wound around the tubing will have a voltage induced therein as the pressure velocity polarized magnetized gas particles pass therethrough. The induced voltage has utilization as an electrical power source. The hydrogen and oxygen gas may be utilized such as in a burner system or alternatively returned to the gas storage portion of the hydrogen generator in a closed-loop arrangement for recycling.

CROSS REFERENCE AND BACKGROUND:

There is disclosed in my co-pending patent application, filed, September 16, 1981, Serial Number, 302,807, for, Hydrogen Generator, a hydrogen gas generating system. The apparatus comprises a pressure tight enclosure for a water bath having immersed therein an array of plates. The hydrogen and oxygen atoms are disassociated from the water molecule by the application of a non-regulated, non-filtered, low-power, direct current voltage potential to the plates having water passing therebetween. The plates are non-oxidizing and of similar metal to comprise a sub-atomic action non-electrolysis system. The upper portion of the container is a hydrogen/oxygen storage chamber for maintaining a predetermined level.

In my co-pending patent application, Serial Number: 411,977, for, Controlled Hydrogen Gas Flame, filed, August 25, 1982, there is disclosed a hydrogen gas burner. The nozzle in that burner is connected to the storage area or gas collection chamber via an appropriate line. The port in the nozzle has an opening of a controlled size and configuration, related to the size of the flame and the temperature and velocity of the burning gas mixture.

Also, in my co-pending patent application, Serial Number 367,051, for Electrical Particle Generator, filed April 4, 1982, there is disclosed an electrical generating system.

2

The non-magnetic pipe is filled with the discrete gas particles having a magnetic polarized field placed thereon. The magnetic charged gas particles, proceed through the pipe at a high velocity dependent on the pressure in the gas generator storage chamber.

As the magnetic particles pass through the core of the winding there is induced a voltage/current therein, that may be utilized in the same manner as any other electrical source.

The hydrogen/oxygen gas mixture emitted from the opposite end of the pipe is connected to a gas burner where the hydrogen/ gas mixture may be utilized such as for a flame as shown in my copending application, Serial number, 411,977. When the flame is not in use the gas is directed back by alternate means to the storage chamber in the hydrogen generator in a closed loop arrangement.

3

SUMMARY OF INVENTION:

The present invention utilizes the basic principle of a particle accelerator and the principle of inducing a voltage current in a secondary winding by passing a magnetic element therethrough in combination with a hydrogen gas generator. The particle accelerator utilizes the principles of my co-pending application, Serial Number, 367,051, and the hydrogen generator is particularly that of my co-pending patent application, 302,807.

The structure comprises an electrical inductive winding, having a large number of turns and an output for utilizing the voltage current induced therein. The inductive winding is positioned around an endless - closed loop, non-magnetic pipe or tubing.

The hydrogen gas generator encompasses an array of plates immersed in a pressure tight enclosure. Direct current voltage applied to the plates causes the hydrogen/oxygen gasses to disassociated from the water molecule. The upper portion of the container is a hydrogen/oxygen storage chamber for maintaining a predetermined gas pressure. A hydrogen/oxygen gas mixture outlet means connects the non-magnetic tubing to the storage chamber of the generator. Adjacent the outlet a magnetic polarizer establishes a magnetic field and imparts a magnetic potential to the hydrogen and the oxygen gas being pressure released from the outlet.

4

The apparatus comprises a non-magnetic pipe in a closed loop having a substantial amount of magnetized particles encapsulated therein. A magnetic accelerator assembly is positioned on the pipe includes an inductive primary winding with a low voltage input. A secondary winding is positioned on the pipe opposite to the primary winding. Upon voltage being applied to the primary winding the magnetized particles accelerate through the magnetic accelerator assembly with increase velocity. The velocity accelerated particles induce an electrical voltage/current potential as they pass through the secondary winding. In a closed-loop system the process is continuous. The increased secondary voltage current is utilized in a direct current or alternate current amplifier arrangement.

5

OBJECTS:

It is a principal object of the present invention to provide a hydrogen gas electrical generator capable of producing a voltage/current much greater in magnitude here-intofore possible.

Another object of the present invention is to provide such a hydrogen gas electrical generator utilizing magnetized elements and wherein the magnetized elements are charged gas particles from a hydrogen generator.

Another object of the present invention is to provide such a hydrogen gas electrical generator in combination with a controlled output hydrogen generator.

Another object of the present invention is to provide such an electrical generator that may be utilized with a hydro-gen generator having another utility output for alternative generation.

A further object of the present invention is to provide such an electrical generator that utilizes components readily available are adaptable to the simplified embodiment.

Other objects and features of the present invention will become apparent from the following detailed description when taken in conjunction with the drawings in which:

BRIEF DESCRIPTION OF DRAWINGS

Figure 1 is a simplified illustration of the principles of the invention, in crosssection showing the particles voltage/current amplifier together with the hydrogen generator in a preferred embodiment.

Figure 2 is a magnetic particle tubing, in an electrical schematic circuit arrangement, illustrating the induced direct and alternating current voltage.

DETAILED DESCRIPTION OF DRAWINGS:

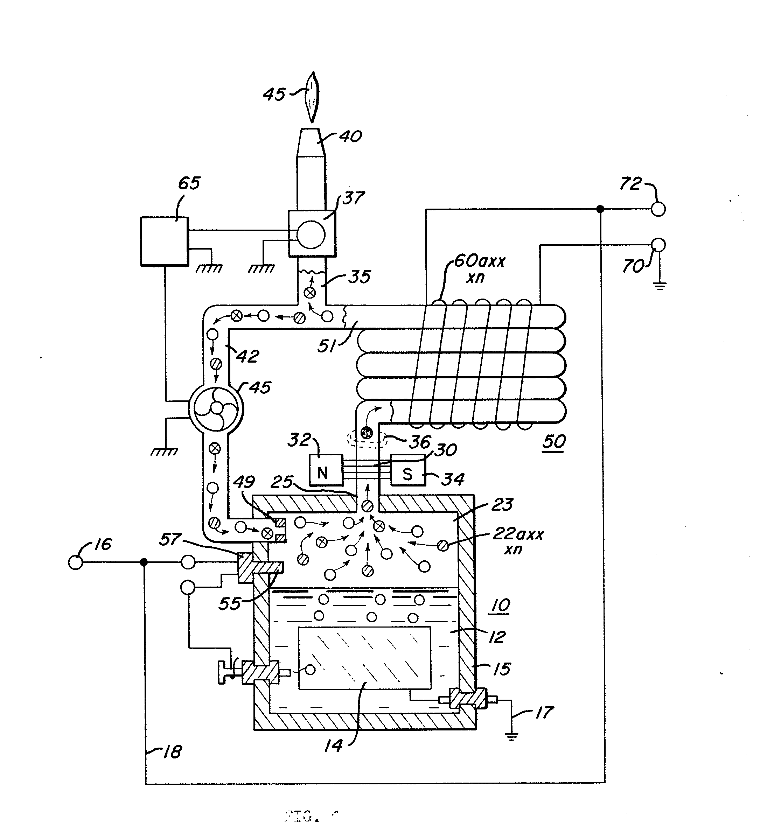

Referring now to Figure 1 there is illustrated the invention of the preferred embodiment in a simplified schematic arrangement. The generator 10 comprises an airtight pressure enclosure/housing 15. The housing 15 is filled with water 12 to a predetermined level. Immersed in the water 12 is an array of plates 14. In the preferred embodiment of the invention of Figure 1, as disclosed in my co-pending application serial number 302,807. The plates 14 are in pairs of similar non-oxidizing metal. A negative voltage current potential and a positive voltage current potential from source 16 is applied to alternate plates of the array 14. The generation of hydrogen/oxygen is a sub-atomic process, i.e., not electrolysis. That is, the applied potential to the plates causes the hydrogen and oxygen atoms to disassociate themselves from the water molecule. Accordingly, the process is operative with any water irrespective of its purity or amount of contamination.

7

It is understood, of course, that the hydrogen generator may be that of the electrolysis process---although more costly and less efficient. In that event the plates 14 would an anode and cathode and the water would be distilled water with a chemical added.

The released hydrogen gas depicted as particles 20a xxx n and oxygen gas particles 22a xxx n are collected and stored in the chamber 23 together with other released gasses such as nitrogen 21a xxx. The chamber 23 further includes switch means 57 to shut off the electrical source 16 to the generator system when the pressure in the chamber 23 sensed by pressure gauge, 55, achieves a predetermined level.

In the operation of the hydrogen generator as a burner, as disclosed in the co-pending patent application Serial Number 411,797, the outlet tube 25 is connected directly to the nozzle 40 to obtain the flame 45 upon ignition. The operation of the gas burner is not altered in the present invention.

There is interposed in the line 25, a magnetic polarizer 30 having magnetic poles 32 and 34. The magnetic polarizer 30 may be a permanent magnet or an electrical magnet capable of creating a magnetic field 36 across the non-magnetic tubing 25. The magnetic field 36 in turn imparts a magnetic charge to the gasses released from the storage chamber 33. The hydrogen gas particles become positively magnetically charged and the oxygen particles become negatively magnetically charged - producing a magnetized gas - mixture.

Also interposed in the outlet tubing 25 adjacent to the magnetic polarizer 30 is a series of loops of non-magnetic tubing 50. The tubing in its loop configuration can be any one of the arrangements illustrated in my co-pending patent application, serial number supra. The opposite end 51 of the loop 60 tubing is connected via a Y connection either to the burner assembly 40, via line 35, or a return line 42 to the storage chamber 23. As aforesaid, the storage chamber 23 is maintained at a predetermined pressure; and once the pressure is attained the gas particles will be expelled into outlet line 25 with a substantial velocity. The pressure released particles become charged by the magnetic polarizer 30 and pass through the entire loop arrangement of tubing 50.

The loop arrangement of tubing 50 has wound thereon a substantial number of turns 60a xxx n in a winding 60. The number and size of the turns is related to the tubing configuration and voltage current output. The magnetically charged gas particles traveling with a high pressure velocity pass through the tubing 55. As the magnetically charged gas particles pass through the core of the winding 60, there is induced a voltage current therein through its inductive field. The output voltage current is utilized via terminals 70-72.

Upon demand for the flame, (such as for heat) from demand circuit 65, the valve 37 is opened causing the gas mixture to go to the nozzle 40 and provide the flame 45 upon ignition.

9

Upon satisfaction of the demand, the valve 37 will close and thereby cause the gas mixture to return to the collection chamber 23 via close loop line 42. In this arrangement the pump 45 will turn on and cause a continuous circulation of the gas through the closed loop. One way check valve 49 assures that no gas enters line 42 when the pump 45 is quiescent. If the gas in the collection chamber is of the preset pressure, as sensed at gauge 55, the voltage via terminal 16 will be cutoff discontinuing the generation of gas.

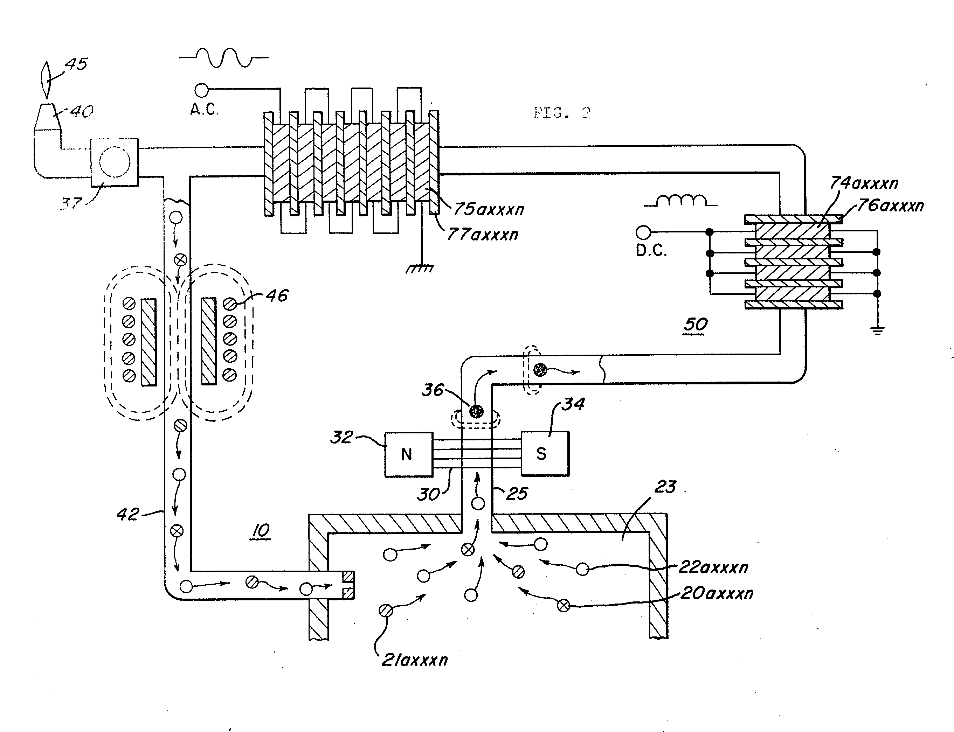

With particular reference to Figure 2 there is illustrated, partly in schematic and partly pictorial, the preferred embodiment of the invention.

Initially it is noted that the pump 45 of Figure 1 has been replaced by the particle accelerator 46. The accelerator 46 is a non-mechanical/no moving part element and therefore not subject to wear. It is to be recalled the hydrogen and oxygen gasses have placed there on a magnetic field potential. Hence, as the magnetized gasses approach the accelerator 46 they are attracted and as they pass the center of the accelerator and they are propelled therethrough.

Other propulsion means in lieu of the pump 45 of Figure 1 or the accelerator 46 of Figure 2 may be utilized.

The volume of the hydrogen/oxygen gas as dictated by the storage area 23 and the pressure of the hydrogen/oxygen gas stored therein determines the magnetic field strength. The greater the pressure, the greater the velocity; and, in turn, the greater the voltage/current output.

As noted in the aforesaid co-pending patent application, the induced current/voltage can be, at the output 70-72, either direct current, or alternating current, or both. With reference to Figure 2, the simplified schematic illustrates a direct current voltage 4 parallel winding and an alternating current 75 in serial winding.

The number of coils 74a xxx n of direct current windings of coil 74 will determine the ripple frequency of the direct current voltage and its amplitude. Similarly, the number of alternating current windings 75a xxx n will determine the alternating frequency of the alternating current voltage and its amplitude.

More importantly, the aforesaid ripple frequency of the single polarity voltage of coil 74 and alternating frequency of the alternating voltage of coil 75 can be altered, varied, and controlled. That is, the frequency is a function of the number of discrete windings of the coils times the velocity of the gas per second. The velocity of the gas, in turn, is varied by varying its magnetic field; and the magnetic field is varied by varying the pressure of the gasses in the chamber 23.

Further, it has been found that the increase in pressure of the gasses in chamber 23 increases the velocity of the gas exponentially. Simply, an arithmetical increase in pressure of the gasses released results in a geometrical increase in frequency and amplitude of the output voltage from either the direct current winding 74 or the alternating current winding 75.

There will be instances where an increase in velocity (pressure) is needed to increase the output voltage of the electrical generator but the generation of more hydrogen gas may be undesirable. That is, for instance, the flame 45 is a controlled gas mixture flame. The addition of more hydrogen will increase the temperature of the combustibility of the mixture and will increase its velocity. The utility of the flame, if not quenched, will be affected proportionately.

Accordingly, to increase the gas pressure in chamber 23 other non-combustible gasses 21a xxx n, such as nitrogen are added via pressure inlet means to the mixture.

Although certain and specific embodiments are shown and described, alternatives and modifications may be had without departing from the spirit and scope of the invention.

CLAIMS:

1. In combination, a hydrogen/oxygen electrical generator comprising:

a housing having a water reservoir for retaining natural water therein and a gas collection chamber maintaining a preset volume of gas under pressure,

a pair of similar non-oxidizing plates positioned in said water reservoir,

a direct current voltage source connected to said plates to cause a sub-atomic force-type action on said water,

said action disassociating the hydrogen atoms and oxygen atoms from said water molecules; and

a non-magnetic tubing for passing magnetic lines of force, connected at one end to said collection chamber via said outlet,

a magnetic polarizer positioned adjacent to said one end of said tubing for magnetically charging said hydrogen and oxygen gas atoms pressure expelled from said outlet,

an inductive winding positioned over said tubing; and

wherein the flux lines of said magnetized gas passing through said tubing and traversing said inductive winding induce a current/voltage in said inductive winding, and,

said winding having means for utilization of said induced voltage/current.

2. The combination of Claim 1 further comprising:

gas utilization means connected to the other end of said tubing for utilizing said generated hydrogen/oxygen gas mixture.

3. The combination of Claim 1 further comprising:

a nozzle connected to the other end of said tubing, of a predetermined size and configuration, having a port for expelling said mixed gasses, and

means for igniting said gasses.

4. The combination of Claim 1 further comprising:

control means for maintaining a predetermined gas pressure in said collection chamber.

5. The combination of Claim 1 further comprising:

a pressure gauge for determining the pressure in said collection chamber, and

switch means connected to said direct current voltage source to terminate the generation of hydrogen/oxygen gasses upon said collection chamber attaining a predetermined pressure.

6. The combination of Claim 1 further comprising:

a gas line tubing connected to the other end of said nonmagnetic tubing and to said collection chamber in a closed loop arrangement.

7. The combination of Claim 1 further comprising:

a gas line tubing connecting the other end of said non-magnetic tubing to said collection chamber in a closed loop arrangement, and

means in said gas line tubing for maintaining said polarized hydrogen and oxygen atoms circulating through said non-magnetic tubing.

8. The combination of Claim 1 further comprising:

a gas line tubing connected to the other end of said non-magnetic tubing to said collection chamber in a closed loop arrangement, and

a unidirectional valve connected to the end of said gas line tubing connected to said collection chamber.

9. The combination of Claim 1 further comprising:

a gas line tubing and gas utilization means,

a Y-type connector for alternately connecting said gas line tubing to said gas utilization means and said collection chamber in a closed loop arrangement.

10. The combination of Claim 1 further comprising:

a gas line tubing and gas utilization means,

a Y-type connector for alternately connecting said gas line tubing to said gas utilization means said collection chamber in a closed loop arrangement,

two directional valve means, and

a demand circuit connected to said valve means for selectively connecting said gas line tubing to said gas utilization means or said collection chamber in response to pre-determined conditions.

11. In combination, a gas electrical generator comprising:

a gas generator housing having a gas collection chamber for maintaining a preset volume of gas therein under pressure,

an outlet attached to said gas collection chamber,

a non magnetic tubing connected to the opposite end of said outlet,

a magnetic polarizer positioned adjacent to said outlet between said chamber and said tubing for magnetically charging said gas pressure expelled from said outlet,

an inductive coil positioned over said non-magnetic tubing and wherein the flux lines of said magnetized gas passing through said tubing and traversing said inductive coil, induce a current/voltage therein,

means connected to said coil for utilization of said induced voltage/current.

12. The gas electrical generator of Claim 11 wherein:

said gas is a combustible gas, and utilization means connected to the opposite end of said non-magnetic tubing for utilizing said gasses.

13. The combination of a gas electrical generator as set forth in claim 11 wherein:

said coil comprises a plurality of windings wound in parallel, and wherein said induced voltage/current therein is of a single polarity.

14. The combination of a gas electrical generator as set forth in Claim 11 wherein:

said coil comprises a plurality of windings wound in series, and wherein said induced voltage/current therein is of alternate polartips.

0106917

15. The combination of a gas electrical generator as set forth in Claim 11 wherein:

said coil comprises a plurality of windings and wherein the number of said plurality of windings is determinative of the frequency of the said induced voltage/current therein.

16. The combination of a gas electrical generator as set forth in Claim 11 further comprising:

means for varying the pressure of said gas in said collection chamber to vary the output frequency of said induced voltage in said coils.

17. The combination of a gas electrical generator as set forth in Claim 11 further comprising:

means for varying the generation of said gas to vary the pressure of said gas in said collection chamber to vary the output frequency of said induced voltage in said coils.

18. The combination of a gas electrical generator as set forth in Claim 11 further comprising:

means for adding non combustible gasses to said collection chamber to vary the pressure of said gas in said collection chamber to vary the output frequency of said induced voltage in said coils.

19. The gas electrical generator of Claim 11 wherein:

said non-magnetic tubing further comprises means connected thereto for returning said magnetized gas to said collection chamber, and

means for recirculating said gas through said chamber, said non-magnetic tubing and said last named means.

20. The gas electrical generator of Claim 11 wherein:

said non magnetic tubing further comprises means connected thereto for returning said magnetized gas to said collection chamber,

a particle accelerator for recirculating said gas through said chamber, said tubing, and said last named means.

FIG. 2

FIG. 2

0106917

European Patent
Office

**EUROPEAN SEARCH REPORT**

Application number

EP 82 11 1599

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| E | EP-A-0 086 439  (MEYER)<br>* Figures 1,2; claim 1 * | 1,2 | F 02 B  43/10<br>F 02 M  25/12<br>G 21 K   1/00 |
| Y | GB-A-1 549 738  (BELL)<br>* Page 1, lines 1-90 * | 1,2 | |
| Y | FR-A-  987 506  (DEVAUX)<br>* Page 1 * | 1,11 | |
| A | DE-A-2 817 501  (NEIDLEIN)<br>* Page 2, paragraphs 1-7 * | 1,2 | |
| A | FR-A-2 296 770  (BEESTON)<br>*  Page  22,  line  38 - page 24, line 35 * | 1,2 | |
| A | FR-A-1 348 373  (COMMISSARIAT A L'ENERGIE ATOMIQUE)<br>* Page 1, left-hand column * | 1 | **TECHNICAL FIELDS SEARCHED (Int. Cl. ³)**<br><br>F 02 B<br>F 02 M |
| A | EP-A-0 042 571  (KYBUTZ)<br>* Claims 1,8-10 * | 1 | G 21 K |

The present search report has been drawn up for all claims

| Place of search<br>THE HAGUE | Date of completion of the search<br>09-01-1984 | Examiner<br>WASSENAAR G. |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82